Europäisches Patentamt

European Patent Office

Office européen des brevets

(11) Veröffentlichungsnummer: **0 350 034**

**A2**

(12) **EUROPÄISCHE PATENTANMELDUNG**

(21) Anmeldenummer: 89112367.1

(22) Anmeldetag: 06.07.89

(51) Int. Cl.⁴ **B29C 55/04** , **B29C 51/00** , //B29L16:00

(30) Priorität: 08.07.88 DE 3823133

(43) Veröffentlichungstag der Anmeldung:
10.01.90 Patentblatt 90/02

(84) Benannte Vertragsstaaten:
AT BE CH DE ES FR GB GR IT LI LU NL SE

(71) Anmelder: Gruber, Bruno
Ordenslandstrasse 39
D-8037 Olching(DE)

(72) Erfinder: Gruber, Bruno
Ordenslandstrasse 39
D-8037 Olching(DE)

(74) Vertreter: Kern, Ralf M., Dipl.-Ing.
Kern, Lang & Partner Patent- und
Rechtsanwaltsbüro Postfach 14 03 29
D-8000 München 5(DE)

(54) Strukturierte Folie aus Kunststoff, insbesondere thermoplastischer Kunststoff wie z.b. Polyäthylen sowie Verfahren und Vorrichtung zu ihrer Herstellung.

(57) Die Erfindung umfaßt eine strukturierte Kunststoff-Folie aus durch Recken reckhärtbarem, insbesondere thermoplastischem Material z. B. aus Polyäthylen, Polypropylen, Polyamid, Polyvinylchlorid oder dergleichen, welche miteinander, vorzugsweise über die Folienfläche alternierend, sowohl einerseits reckgehärtet strukturierte Folien-Bereiche als auch andererseits ungereckte, d. h. ungehärtete Folienflächen-Bereiche aufweist, deren Anordnung zueinander auf eine unterschiedliche Steifigkeit bzw. Festigkeit der Folie für eine unterschiedliche mechanische Beanspruchung der strukturierten Folie in verschiedenen Beanspruchungsrichtungen abgestimmt ist, wobei die reckgehärteten Folien-Bereiche bzw. Zonen und die angrenzenden ungereckten Folienflächen-Bereiche bzw. Zonen mit ihren Flächen-Ebenen in einem Winkelbereich zwischen etwa 30° bis 90°, vorzugsweise zwischen 80° bis 90° zueinander angeordnet sind, sowie ein Verfahren und eine Vorrichtung zu deren Herstellung.

EP 0 350 034 A2

Strukturierte Folie aus Kunststoff, insbesondere thermoplastischer Kunststoff wie z. B. Polyäthylen sowie Verfahren und Vorrichtung zur ihrer Herstellung

Die Erfindung betrifft eine durch Recken von reckhärtbarem, insbesondere thermoplastischem Material wie z. B. aus Polyäthylen, Polypropylen, Polyamid oder Polyvinylchlorid hergestellte strukturierte Kunststoff-Folie, sowie ein Verfahren und eine Vorrichtung zu deren Herstellung.

Das Reckhärten von thermoplastischem Material ist für die vollständig durchgehende bzw. ganzflächige Steifigkeits-bzw.Festigkeitserhöhung von Kunststoff-Folien bekannt, womit aber einerseits meist eine nachteilige Versprödung des gesamten Folienmaterials einhergeht und damit eine entsprechende Beschränkung ihrer Anwendungsmöglichkeiten und Lebensdauer verbunden ist. Dabei wird eine über die gesamte Folienfläche möglichst gleichmäßige Reck-härtung durchgeführt (DE-OS 25 03 775; DE-PS 830 413).

Aufgabe der Erfindung ist es eine Kunststoff-Folie zu schaffen, welche unter Vermeidung dieser Nachteile je nach Bedarf unterschiedliche Festigkeitswerte in unterschiedlichen Beanspruchungsrichtungen aufweist und welche auf einfachste Weise und mit optimal preislich günstigem Material der Ausgangsfolie herstellbar ist.

Demgemäß besteht die Erfindung in einer strukturierten Kunststoff-Folie der vorgenannten Art, welche miteinander, vorzugsweise über die Folienfläche alternierend, sowohl einerseits reckgehärtete vorzugsweise strukturierte, Folien-Bereiche als auch andererseits ungereckte, d. h. ungehärtete Folienflächen-Bereiche aufweist, deren An-ordnung zueinander auf eine unterschiedliche Steifigkeit bzw. Festigkeit der Folie für eine unterschiedliche mechanische Beanspruchung der strukturierten Folie in verschiedenen Beanspruchungsrichtungen abgestimmt ist, wobei die reckgehärteten Folien-Bereiche bzw. Zonen und die angrenzenden ungereckten Folienflächen-Bereiche bzw. Zonen in einem Winkelbereich zwischen etwa 30° bis 90° vorzugsweise zwischen 80° bis 90° zueinander angeordnet sind.

Überraschenderweise hat sich für z. B. eine solche Kunststoff-Folie aus Weich-PVC, welche aus einem schmalen, im Querschnitt leicht trapezförmigen Längs-Streifenprofil mit nur 1 mm breiten parallelen Streifen und 0,5 mm Profilhöhe besteht, in Längsrichtung eine um das ca. 25-fache größere Festigkeit bzw. Steifigkeit als bei der Ursprungsfolie ergeben, und quer dazu eine um den Faktor 10 bessere Elastizität als bei der unbehandelten Folie mit einer Dicke von nur ca. 0,15 mm bzw. der ungereckten Bereiche ergeben. Trotzdem wird mit einer solchen als Beispiel angegebenen Folie aus Weich-PVC mit einer Ausgangsdicke von ca. 0,15 mm und einer Dicke der gereckten Folien-Bereiche von rund 0,02 mm eine Druckfestigkeit von $4t/m^2$ erreicht. Die Art der mit der Erfindung verwendeten Profilierung erfaßt im wesentlichen derartige oder entsprechende Fein-Profilierungen.

Weitere Merkmale der Erfindung - auch verfahrens- und vorrichtungsmäßig - ergeben sich aus den Patentansprüchen 2 bis 14.

Rein verfahrensmäßig und bezüglich der Querschnittsstruktur der erfindungsgemäßen Strukturfolie, wird die Profilierung durch Walzen ohne jede Veränderung der ursprünglichen Folienbreite erreicht, indem die zwischen Verformungskanten der Walzen reckgehärteten Folien-Profilbereiche etwa um das 8-fache dünner werden und auch ein gradueller, allmählicher Übergang der Materialdicke im Bereich beidseitig der Reckkanten geschaffen wird. Dabei ist die einmal vorgenommene Strukturierung bzw. Formgebung praktisch nicht rückstellbar.

Die mit der Erfindung erzielten, überraschend günstigen Materialeigenschaften erlauben deren vielfältige Einsatzmöglichkeiten auch über die einfache Verwendung als festigkeitsmäßig verstärktes und elastisch schützendes Verpackungsmaterial z. B. als Verpackungskästchen oder -Beutel, wobei auch ein Schutz gegen Schlagbeanspruchung gegeben ist, oder zur Wärmeschutzeinrollung bzw. Umhüllung von kälteempfindlichen Gegenständen.

Dies gilt insbesondere bei der Verwendung als Sandwich-Element, bei dem nicht nur die verstärkte Festigkeit, sondern - auch in Verbindung mit Überleitungslöchern -die mit der Strukturfolie gebildeten feinen Kanäle bzw. Kapillaren zur Flüssigkeitsdurchleitung (z. B. als Heiz-und Kühlelemente), Gasdurchleitung (z. B. Begasung, Hinterlüftung für Tapeten) vielfältig ausgenutzt werden können. Als Zwischenlagen können flache Kunststoff-Folien oder poröse Membranen oder auch dünne Metalle verwendet werden. Beidseitig mit Papier beklebt ergibt sich eine einfache Verwendung als Kartonmaterial. Auch zur Schalldämpfung auf Oberflächen, insbesondere unter Wasser ist die erfindungsgemäße Folien-Struktur einsetzbar, ebenso zur Erzielung laminarer Strömung an Oberflächen. Zudem sind die Folienoberflächen gut benetzbar. Da viele Thermoplasten, wie Polyacethylene oder Polyamid oder Polypyrrol intrinsische oder auch gefüllte (z.B. kohlenstoffgefüllte) elektrisch leitende Materialien sind, kann die erfindungsgemäße Folie auch vorteilhaft als Oberflächenvergrößerung als elektrische Leiter dienender Flächen, z.B. als Wärmeableitung oder zum Ionenaustausch bei Elektroden oder zur elektrischen Behandlung von in den Profilen geführten Medien verwendet werden. Auch bei der Anwendung als photovoltaisches Material, z. B. in Solarzellen (z.B. Polyvinylcarbazol) kann die erfindungsgemäße Strukturierung von Vorteil sein. Durch Bedampfen der Innenflächen der Folien mit Metall lassen sich optimale Wärmenutzungs- bzw. Reflexionseffekte erzielen. Bei Verwendung der erfindungsgemäßen Folie als formgebende Oberfläche z. B. für Gips werden genau definierte feinstrukturierte Oberflächen mit verdoppelter Oberfläche erreicht.

Die Erfindung ist nachstehend anhand von Zeichungen in mehreren Ausführungsbeispielen näher beschrieben.

Es zeigt

Fig. 1 einen Längsschnitt durch erfindungsgemäß verwendete Profilwalzen,

Fig. 2 eine perspektivisch angedeutete Teilschnittdarstellung einer erfindungsgemäße Strukturfolie,

Fig. 2a eine vergrößerte Schnittdarstellung eines Ausschnitts aus Fig. 2,

Fig. 3 schematische Stirnseitendarstellung einer Anwendungsform der erfindungsgemäßen Strukturfolie (Verwendung als Wärmeisolation) schlagfeste Rollverpackung oder zur Wärmeisolation,

Fig. 4a bis 4d miteinander kombinierbare Einzelelemente in Querschnittsdarstellung zur Erläuterung verschiedener Anwendungsvariationen der erfindungsgemäßen Strukturfolie,

Fig. 5a bis 5b miteinander kombinierbare Einzelelemente in Querschnittsdarstellung zur Erläuterung weiterer Anwendungsvariationen der erfindungsgemäßen Strukturfolie.

Fig. 6 und 7 Draufsichtdarstellungen von Anwendungs variationen der erfindungsgemäßen Strukturfolie.

Fig. 8 eine schematische Querschnittsdarstellung einer Anwendung der erfindungsgemäßen Strukturfolie als Abdeckung einer Elektrolyt-Elektrode zur Abführung der darauf gebildeten Gase nach oben, und

Fig. 9 eine perspektivisch angedeutete Darstellung einer verbesserten Ausführungsform erfindungsgemäßer Profilwalzen.

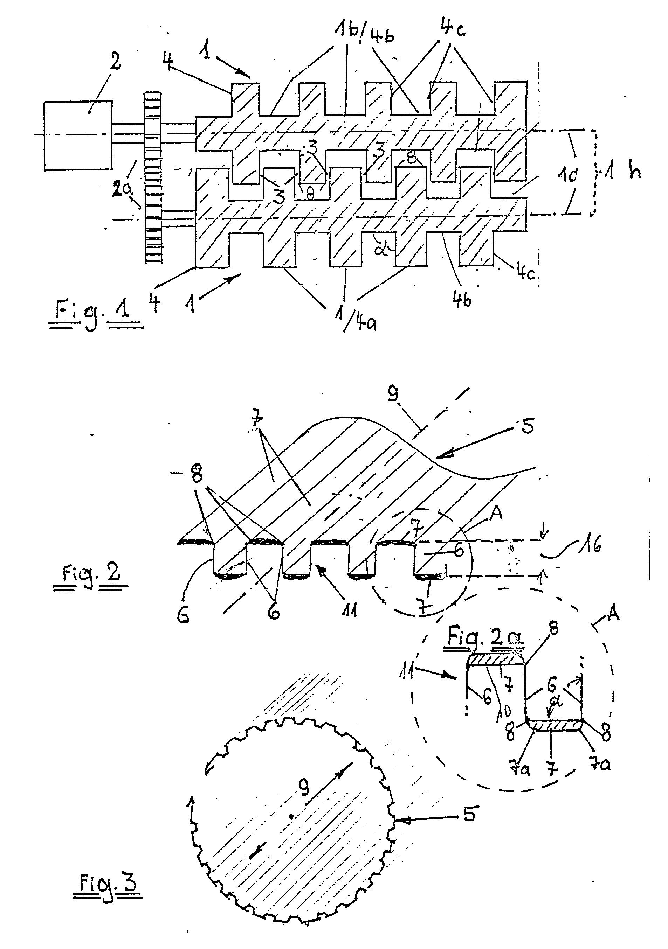

Die Strukturierung einer Strukturfolie 5 mit U-förmiger Oberflächenstruktur gemäß Fig. 2 erfolgte zwischen Walzen 1 mit parallelen Walzenachsen 1c und einem Antrieb 2 mit einem Synchrongetriebe 2a. Gemäß Fig. 1 besitzen die auf einen Walzenabstand 1h angeordnete Walzen 1 auf ihrer Mantelfläche ein ineinander greifendes Walzenprofil 4 mit einem außen umgreifenden Walzprofil 1b der einen Walze und einem axial auf Abstand angeordneten innengreifenden Walzprofil 1a, und zwar mit entsprechenden außenliegenden Axialprofilflächen 4a und innen liegenden Axial-Profilflächen 4b. Der Walzendurchmesser kann z. B. 5 cm betragen.

Beim Walzen in Längsrichtung 9 (Fig. 2) halten die aneinandergedrängten Axial-Profilflächen 4a und 4b die zu strukturierende Folie 5 in diesen Bereichen fest, wobei der jeweils seitlich anschließende Folien-Bereich 6 um Reckkanten 8 entlang der Flankenbereiche 4c des Walzprofils 4 im wesentlichen kalt gereckt wird und zwar im Winkel von 30° bis 90°. Anders als zwischen den Axialprofilflächen 4a und 4b ist zwischen den Flankenbereichen 4c beider Walzprofile 4 ein Spalt bzw. vorzugsweise ein freies Spiel 3 vorgesehen, so daß die Folie in diesem Bereich frei beweglich bzw. ohne Reibung im wesentlichen kalt reckbar ist. Zwischen dem gereckten und dem ungerecktem Bereich bildet sich dabei eine allmählich dünner werdende Übergangszone 7a im Bereich der Reckkanten 8.

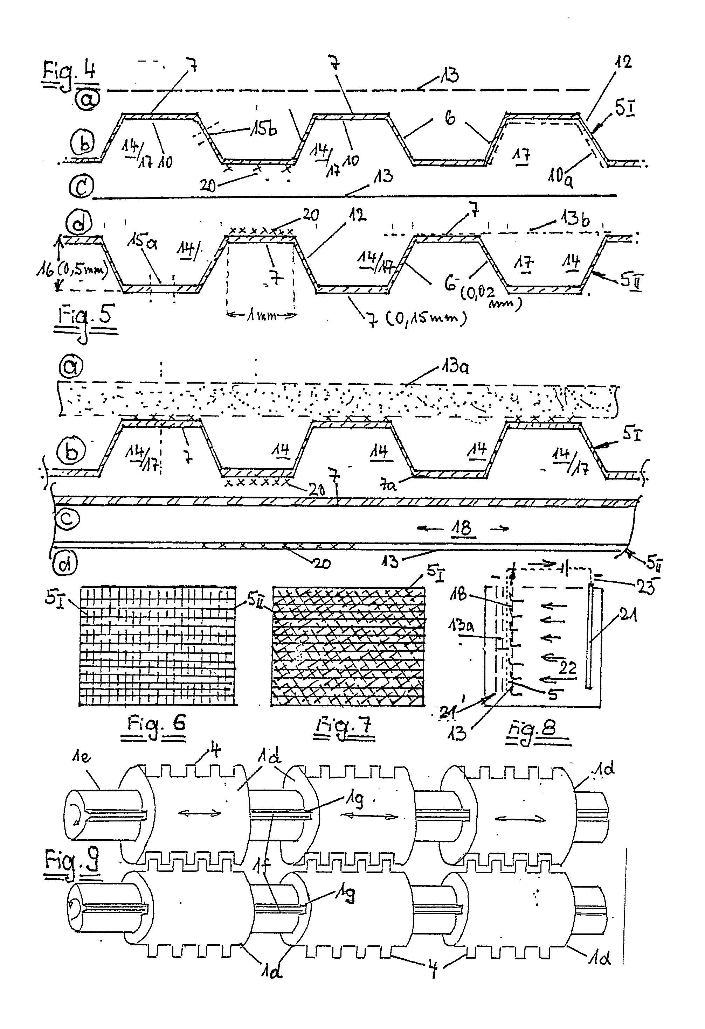

Dabei bilden sich an den Flanken der Folienstruktur bei kaltreckbaren Folien-Materialien wie z. B. weiches Polyvinylchlorid, Polyäthylen und anderen Thermoplasten durch Recken gehärtete gereckte Flankenbereiche 6 und bei z. B. U-Profilstruktur 11 gemäß Fig. 2 oder Trapez-Profilstruktur 12 (Fig. 4b und 4d bzw. 5b und 5d) ungereckte Außenseitenflächen 7, welche in ihrer Dicke, abgesehen von einem Übergangsbereich 7a nahe den Reckkanten 8, nach dem Walzen praktisch nicht reduziert sind. Sowohl bei der U-Profilierung 11 als auch bei der trapezförmigen Profilierung 12 kann die innen liegende Oberfläche 10 der Profilkanäle auch leicht konkav oder konvex ausgebildet sein.

Die mit einer Profilhöhe 16 zu strukturierende Folie 5 wird beim Walzen breitenmäßig auch nicht zusammengezogen, so daß sie in einem Walzgang mit der Folienherstellung strukturgewalzt werden kann, auch in zwei oder mehr Lagen übereinander und mit einer Walzgeschwindigkeit, die synchron zum regulären Folienwalzen ist.

Gemäß Fig. 2 und insbesondere den kombinierten Fig. 4a -d und 5a - d kann die Strukturfolie 5 auf verschiedenste Weise in wahlweise verbundenen Schichtlagen eingesetzt werden.

Dabei kann mittels Perforierungen oder Löchern 15a eine Verbindung vom Profilinnenraum 17 18 der Profilkanäle 14 zur anderen Strukturseite hin erfolgen oder auch durch die gereckten Flankenbereiche 6 (Löcher 15b) hindurch. Die Löcher 15a bzw. 15b können auch in entsprechender Vielzahl bzw. Dichte zueinander vorgesehen sein, so daß sich Begasungs- oder Durchgasungswirkungen erzielen lassen. Auch kann die Innenfläche 10 der Profilkanäle mit einer Beschichtung, z. B. einer reflektierenden und elektrisch leitenden Metallbeschichtung 10a (aufgedampft) versehen sein.

Ein Strukturprofil 5 kann entweder einseitig (Fig. 4a + b) oder beidseitig (Fig. 4a + b + c) z. B. durch Kleben oder Schweißen (Verbindungsfläche 20 z. B. auch Punktschweißung) mit einer ebenen, bzw. Abdeck- und/oder Zwischenlage 13 versehen sein, welche auch als Kraftverbindungslage (13b s. Fig. 4d) zwischen den Axialprofilflächen 4a dient und die Festigkeit als Sandwichstruktur erheblich erhöht sowie die Profilkanäle 14 abschließt.

Diese Profilkanäle 14 können auf diese Weise jede Art von Medien (Wasser, Luft, Gase etc.) führen. Als Abdeck- oder Zwischenlage kann zum Stoffaustausch eine mit Löchern definierter Größe oder mit Poren versehene Membran dienen, oder auch Papier und andere Folien.

Bei Kombination mit einer steifen Abdecklage bzw. einer festen Rückseitenlage 13a (Fig. 5a mit 5b) kann ein steifer Abstand mit einer Profilhöhe 16 geschaffen werden, der auf der Strukturfolienseite hin mit einer weiteren Beschichtung versehen ist (zusätzlich mit Fig. 5c), welche in perforierter Form auch als Schallschutz dienen kann. Bei Anbringung auf einer festen Rückwand und Schaffung eines Luftpolsters auf diese Weise erzielt man unter anderem auch eine Schalldämpfung unter Wasser im KHz-Bereich.

In der Kombination mit einer zweiten Strukturfolienlage 5 II gemäß Fig. 5c (mit Fig. 5a - c) zur ersten Strukturfolienlage 5 I z. B. in rechtwinklig verdrehter Form (s. Fig. 6) erfolgt eine zusätzliche Versteifung, welche mit einer weiteren z. B. schrägen Abdecklage gemäß Fig. 7 weiter verstärkbar ist. Auch kann der Profilinnenraum einer Seite, d. h. 17 oder 18, mit einer aushärtbaren Masse gefüllt bzw. ausgestrichen sein, so daß sich zusätzlich feste Stegversteifungen bilden.

Wenn bei einer trapezförmigen Profilierung 12 gemäß Fig. 4b oder 5b eine Weich-PVC-Folie von 0,15 mm Dicke mit 1 mm breiten ungereckten Außenseitenflächen 7 und einer Profilhöhe 16 von 0,5 mm sowie einer Dicke von 0,02 mm der gereckten Flankenbereiche 6 strukturiert ist, dann ist sie in Richtung der Längsprofilierung etwa 25-fach biegesteifer als eine gleich dicke unbehandelte Folie und in Querrichtung zur Längsprofilierung etwa um das 10-fache elastischer (vgl. z. B. Fig. 3) und besitzt eine Druckfestigkeit von ca 4 t/m². Bei Laminierung eines solchen Trapezprofils zwischen zwei festen Platten ergibt sich eine Druckfestigkeit für dieses Trapezprofil 12 von ca. 10 t/m², obwohl die gereckten Flankenbereiche 6 bei der Strukturgebung bis auf eine Dicke von 0,02 mm herunter gereckt sind.

In Fig. 8 befinden sich in einem Elektrolyten 22 zwei über einen Sromkreis 23 gschaltete Elektroden 21 und 22, von denen die eine entweder als solide Platte 13a ausgebildet ist, welche mit einer strukturierten Folie 5 belegt ist oder als elektrisch leitende strukturierte Folie 5. Diese Folie 5 ist mit einer ionen-durchlässigen Membran 13 (oder perforierten Folie) beschichtet, und zwar in der Weise, daß das an der Elektrode 21′ entstehende Gas zwischen Elekrode 21′ und Membran 13 durch die Kanalquerschnitte 18 aus dem Elektrolyten geführt wird.

Gemäß Fig. 9 können die Walzen 1 in einzelne Walzen-Sektionen bzw. Walzenscheiben 1d unterteilt sein, um eine Breitenvariation zu ermöglichen. Auf diese Weise sind die sich gegenüberliegenden Walzen abschnittweise auch bezüglich des Spalts 3 selbstjustierend und es können damit auch strukturierte Folien 5 hergestellt werden, welche teilweise profiliert und bereichsweise auch unprofiliert sind. Zum gemeinsamen Antrieb sind die Walzscheiben 1d auf eine Walzenaufsteckwelle 1e aufsteckbar und über eine gemeinsame Wellenmitnehmerleiste 1f mit Walzen-Führungsnuten 1g antreibbar.

## BEZUGSZEICHENLISTE

1 = Walzen
1a = innen greifendes Walzprofil
1b = außen greifendes Walzprofil
1c = Walzenachsen
1d = Walzen-Scheiben
1e = Walzen-Aufsteckwelle
1f = Wellen-Mitnehmerleiste
1g = Walzen-Führung mit
1h = Walzen-Abstand
2 = Antrieb
2a = Synchrongetriebe
3 = Spalt bzw. freies Spiel (Reckstrecke)
4 = Walzenprofil
4a = Axial-Profilfläche außen
4b = Axial-Profilfläche radial einwärts
4c = Flankenabschnitte
5 = strukturierte Folie
5I = 1. Folienlage
5II = 2. Folienlage
α = Winkel
6 = gereckte Flankenbereiche bzw. Folien-Bereiche
7 = ungereckte Außenseitenflächen bzw. Folienflächen-Bereiche
7a = Übergangsbereich
8 = Reckkanten
9 = Längsrichtung
10 = innen liegende Oberfläche der Profilkanäle
10a = aufgedampfte Metallschicht
11 = U-Profilierung
12 = trapezförmige Profilierung
13 = gerade Abdeck- oder Zwischenlage (Kraftverbindungslage)
13a = feste Rückseitenlage
13b = Kraftverbindungslage

14 = Profilkanäle bzw. Kapillaren
15a = Löcher
15b = Löcher Flanken
16 = Profilhöhe
17 = Profilinnenraum
18 = Profilinnenraum
20 = Verbindungsfläche
21 = Elektrode
22 = Elektrolyt
23 = Stromkreis

Ansprüche

1. Strukturierte Kunststoff-Folie aus durch Rekken reckhärtbarem, insbesondere thermoplastischem Material z. B. aus Polyäthylen, Polypropylen, Polyamid, Polyvinylchlorid oder dergleichen, welche miteinander, vorzugsweise über die Folienfläche alternierend, sowohl einerseits reckgehärtet strukturierte Folien-Bereiche (6) als auch andererseits ungereckte, d. h. ungehärtete Folienflächen-Bereiche (7) aufweist, deren Anordnung zueinander auf eine unterschiedliche Steifigkeit bzw. Festigkeit der Folie für eine unterschiedliche mechanische Beanspruchung der strukturierten Folie (5) in verschiedenen Beanspruchungsrichtungen abgestimmt ist, wobei die reckgehärteten Folien-Bereiche (6) bzw. Zonen und die angrenzenden ungereckten Folienflächen-Bereiche (7) bzw. Zonen mit ihren Flächen-Ebenen in einem Winkelbereich zwischen etwa 30° bis 90°, vorzugsweise zwischen 80° bis 90° zueinander angeordnet sind.

2. Strukturierte Kunststoff-Folie nach Anspruch 1, **dadurch gekennzeichnet**, daß die reckgehärteten Folien-Bereiche (6) und die ungereckten Folienflächen-Bereiche (7) in gleichmäßig verteilter Anordnung über die Folienfläche verteilt sind, wobei die reckgehärteten Folien-Bereiche die von der Folienebene abweichenden Zonen sind.

3. Strukturierte Kunststoff-Folie nach Anspruch 1 oder 2, **dadurch gekennzeichnet**, daß die reckgehärteten Folien-Bereiche (6) und die ungereckten Folienflächen-Bereiche (7) einer Folie (5) mit einer Dicke von 0,02 bis 1,5 mm, vorzugsweise bis 0,5 mm im wesentlichen in gleicher Richtung verlaufen und insbesondere aus parallelen, streifenförmig alternierend zueinander angeordneten Zonen von ca. 0,8 - 2 mm, z. B. 1 mm breiten, und bis 1,5 mm, z. B. 0,1 bis 0,15 mm dicken ungereckten Zonen sowie jeweils dazwischen liegenden reckgehärteten, ca. bis 0,1 mm, z. B. 0,02 mm dicken Zonen mit bis ca. 1,5 mm, z. B. 0,5 mm Profilhöhe bestehen.

4. Strukturierte Kunststoff-Folie nach einem der vorhergehenden Ansprüche, **dadurch gekennzeichnet**, daß die Folie (5) im Querschnitt eine vielfache U-Profilierung (11) aufweist, deren jeweilige Flankenbereiche bzw. Schenkel die reckgehärteten Zonen (6) sind.

5. Strukturierte Kunststoff-Folie nach einem der vorhergehenden Ansprüche 1 bis 3, **dadurch gekennzeichnet**, daß die Folie (5) im Querschnitt eine vielfache trapezförmige Profilierung (12) aufweist, wobei die obere und die untere Ebene der strukturierten Folie (5) von den ungereckten Folienflächen-Bereichen (7) gebildet werden.

6. Strukturierte Kunststoff-Folie nach einem der vorhergehenden Ansprüche, **dadurch gekennzeichnet**, daß das Material der strukturierten Folie (5) Weich-PVC oder Polyäthylen oder Polypropylen ist.

7. Strukturierte Kunststoff-Folie nach einem der vorhergehenden Ansprüche, **dadurch gekennzeichnet**, daß die Folie (5) partiell über einen Teil ihrer Folienfläche profiliert bzw. strukturiert ist, und daß die Dicke der gereckten Folienflächen-Bereiche (6) dünner als die der ungereckten Folienflächen-Bereiche (7) ist.

8. Strukturierte Kunststoff-Folie nach einem der vorhergehenden Ansprüche, **dadurch gekennzeichnet**, daß mindestens zwei strukturierte Kunststoff-Folien (5) übereinander, gegebenenfalls mit einer flachen Zwischenlage (13) und mindestens einer außenseitigen Abdecklage sandwichartig aneinander angeordnet bzw. befestigt sind.

9. Strukturierte Kunststoff-Folie nach einem der vorhergehenden Ansprüche, **dadurch gekennzeichnet**, daß sie aus elektrisch leitendem Material (z. B. Polyvinylcarbazol, Polypyrrol, Polyacethylen, Polyamid) besteht und als elektrischer Leiter, z. B. als Elektrode verwendet wird.

10. Verfahren zur Herstellung einer strukturierten Kunststoff-Folie nach einem der vorhergehenden Ansprüche, in einem Werkzeug (z. B. Walzen 1) mit ineinandergreifenden Profilbereichen bzw. -flächen (4a, 4b, 4c) quer, insbesondere senkrecht zu ihrem Flächenverlauf derart verformt wird, daß die ungereckten Zonen fest zwischen gegeneinander angedrückten Werkzeugteilen (1a; 1b) gehalten und die dazwischen angeordneten Zonen innerhalb eines freien Spalts (3) von z. B. 0,05 mm bei 0,2 mm dicker Folie vorzugsweise eines Spalts mit freiem Spiel unter Auseinanderziehen der jeweils angrenzenden ungereckten Zonen reckgehärtet werden.

11. Verfahren nach Anspruch 10, **dadurch gekennzeichnet**, daß die Kunststoff-Folie vor ihrer Strukturierung im Werkzeug bzw. zwischen den Walzen erwärmt wird.

12. Vorrichtung zur Durchführung des Verfahrens nach einem der Ansprüche 10 oder 11, **dadurch gekennzeichnet**, daß die mit freiem Spiel (3) versehenen Flankenabschnitte (4c) des Werkzeug- bzw. Walzenprofils (4) entweder praktisch senkrecht oder zwischen 30° bis 90° schräg geneigt zu den axial liegenden Profilflächen (4a, 4b) angeordnet sind.

13. Vorrichtung nach Anspruch 12, **dadurch gekennzeichnet,** daß das Werkzeug (Walzen 1) temperaturmäßig einstellbar ist.

14. Vorrichtung nach einem der Ansprüche 12 und 13, **dadurch gekennzeichnet,** daß die paarweise gegeneinander stehenden Axial-Profilflächen (4a, 4b) abwechselnd breiter und schmaler bzw. unterschiedlich breit sind.

Fig. 1

Fig. 2

Fig. 2a

Fig. 3

Fig. 4

ⓐ

ⓑ

7   7   13   12

5 I

14/17 10   15b   14 10   6   17   10a

ⓒ   20   13

ⓓ   20   12   7   13b

16 (0,5mm)   15a   14   7   14/17   17   14   5 II

6 (0,02 mm)

←1mm→   7 (0,15mm)

Fig. 5

ⓐ   13a

ⓑ   14/17   7   14   14   14   14/17   5 I

20   7   7a   5 II

ⓒ   ←  18  →

ⓓ   20   13   5 II

5 I   5 II   18   23

5 I   13a   21

22   5

21'   21

13   13

Fig. 6   Fig. 7   Fig. 8

1e   4   1d   1d

1g

1f

Fig. 9   1g

1d   4   1d